# EUROPÄISCHE PATENTSCHRIFT

(11) **EP 3 182 359 B1**
(45) Veröffentlichungstag und Bekanntmachung des Hinweises auf die Patenterteilung: **23.04.2025**
(21) Anmeldenummer: 16151468.2
(22) Anmeldetag: 15.01.2016
(51) Int. Cl.: G06Q 20/36

(54) **SYSTEM ZUM BARGELDLOSEN BEZAHLEN VON PRODUKTEN ODER DIENSTLEISTUNGEN**
SYSTEM FOR CASHLESS PAYMENT FOR PRODUCTS OR SERVICES
SYSTEME DE PAIEMENT SANS MONNAIE DE PRODUITS OU DE SERVICES

(30) Priorität: 15.12.2015 US 201562267438 P
(43) Veröffentlichungstag der Anmeldung: 21.06.2017
(73) Patentinhaber: Walter Hanke Mechanische Werkstätten GmbH & Co. KG, 14167 Berlin (DE)
(72) Erfinder: Hartl, Uwe, 14469 Potsdam (DE)
(74) Vertreter: Pfenning, Meinig & Partner mbB

(56) Entgegenhaltungen:
- WO-A1-2015/164366
- WO-A1-2015/186141
- US-A1- 2001 054 083
- US-A1- 2015 235 202
- US-A1- 2015 339 621
- US-B1- 6 772 048
- MDB / ICP ET AL: "Multi-Drop Bus / Internal Communication Protocol National Automatic Merchandising Association EVA European Vending Association EVMMA European Vending Machine Manufacturers Association", 1 February 2011 (2011-02-01), XP055702096, Retrieved from the Internet <URL:https://www.ccv.eu/wp-content/uploads/2018/05/mdb_interface_specification.pdf> [retrieved on 20200608]

## Beschreibung

Die Erfindung betrifft ein System zum bargeldlosen Bezahlen von Produkten oder Dienstleistungen an Automaten, wobei unter Automaten sowohl Verkaufsautomaten als auch Dienstleistungsautomaten, wie beispielsweise Wasch- oder Trockenautomaten verstanden werden sollen.

Aus der US 8 856 045 B1 ist beispielsweise ein solches System bekannt, bei dem ein Automat eine Bezahleinheit aufweist, die mindestens eine Sende/Empfangseinheit für eine Kurzstreckenkommunikation und eine Verarbeitungseinheit mit einem Speicher aufweist. Ein Nutzer mit einem Mobiltelefon, das ebenfalls eine Sende/Empfangsvorrichtung sowohl für eine Kurzstreckenkommunikation als auch für eine Langstreckenkommunikation, eine Verarbeitungseinheit und einen Speicher umfasst, kann mit der Bezahleinheit eine Kurzstreckenkommunikation, wie Bluetooth oder dergleichen aufbauen, wobei diese Kommunikation selbstverständlich verschlüsselt ist. Der Nutzer kann eine Anfrage über ein Produkt oder eine Dienstleistung des Automaten starten, wobei in dem genannten Stand der Technik eine Autorisierungsanfrage für einen Geldbetrag, der für das Produkt oder Dienstleistung zu entrichten ist, von der Bezahleinheit an das Mobiltelefon gesendet wird. Das Mobiltelefon leitet diese Autorisierungsanfrage für einen Geldbetrag an einen Server über eine Langstreckenkommunikation weiter, wobei der Server bei einer Bank oder einem anderen Kreditdienstleister, wie Paypal oder dergleichen steht. Der Server, der die entsprechenden Kreditdaten des Benutzers des Mobiltelefons geliefert bekommen hat, sendet dann ein Bestätigungssignal für den Geldbetrag an das Mobiltelefon unter Verwendung der Langstreckenkommunikation, und das Mobiltelefon leitet dieses Bestätigungssignal an die Bezahleinheit des Automaten über die Kurzstreckenkommunikation weiter. Nach Empfang des Bestätigungssignals wird das Produkt oder die Dienstleistung vom Automaten ausgegeben und der Vorgang ist beendet.

Bei diesem bekannten System zum bargeldlosen Bezahlen sind sowohl eine Kurzstreckenkommunikation als auch eine Langstreckenkommunikation notwendig, um den Verkaufsvorgang durchzuführen, nämlich einerseits zwischen Automat und Mobiltelefon mit einer Kurzstreckenverbindung als auch zwischen Mobiltelefon und Bank oder Kreditinstitut. Wenn daher am Ort des Automaten eine Langstreckenkommunikation nicht möglich ist, kann die bargeldlose Bezahlung nicht ausgeführt werden. Wenn beispielsweise die Automaten als Trocken- oder Waschmaschinen ausgebildet sind, stehen sie häufig in Räumen, wie Kellern oder dergleichen, die keinen Internetzugang als Langstreckenkommunikationsmöglichkeit haben.

Aus der WO2015/186141A1 ist ein Automat mit einer Bezahleinheit, einer Kurzstreckenkommunikation zwischen dem Automat und einer mobilen Einheit sowie eine Langstreckenkommunikation zwischen mobiler Einheit und Server bekannt.

Aus der US2015/235202A1 ist ein System und Verfahren für den bargeldlosen Einkauf an einem Verkaufsautomatenbekannt. Ein herkömmlicher Verkaufsautomat kann mit einem Bluetooth-Transceiver ertüchtigt werden, der mit der Bluetooth-Schnittstelle eines Mobiltelefons kommunizieren kann.

Weiter ist zu diesem Thema der Artikel "Mdb /Icp ET AL:"Multi-Drop Bus/Internal Communication Protocol National Automatic Merchandising Association EVA European Vending Association EVMMA European Vending Machine Manufacturers Association", 1. Februar 2011 (2011-02-01) XP055702096" bekannt.

Aus der US6772048B1 ist ein System zur Steuerung eines oder mehrerer Verkaufsautomaten bekannt, von denen jeder ein zugehöriges Modul hat, das Funksignale senden und empfangen kann, wobei das System eine zentrale Datenerfassungsvorrichtung enthält, die Daten senden kann, die zur Steuerung des Betriebs dieser Automaten verwendet werden können.

Aus der US2015/339621A1 ist ein System mit mehreren Verkaufsautomaten bekannt, die sich mit einer Benachrichtigungseinheit verbinden können. Diese kann mittels der Kommunikation mit einem mobilen Gerät Daten der Verkaufsautomaten an ein Netzwerk weiterleiten.

Es ist eine Aufgabe der vorliegenden Erfindung, ein System zum bargeldlosen Bezahlen von Produkten oder Dienstleistungen unter Verwendung eines Mobiltelefons zur Verfügung zu stellen, bei dem nicht unbedingt zeitgleich mit dem Verkaufsvorgang eine Langzeitkommunikation hergestellt werden muss. Eine andere Aufgabe der besteht darin, bei einem System zur bargeldlosen Bezahlung von Produkten und Dienstleistungen, Informationen, die den Vorgang des Ausgebens der Produkte oder der Dienstleistungen aus dem Automaten und aber auch den Automaten selbst betreffen, an eine entfernt liegende neutrale Zentrale weiterzugeben, die die Informationen über die Automaten und Produkte und Dienstleistungen speichert, wobei beispielsweise der Automatenbetreiber die Informationen, ebenfalls über eine Langstreckenverbindung, abrufen kann.

Diese Aufgabe wird durch die Merkmale der beigefügten Ansprüche gelöst.

Die Erfindung betrifft ein System zum bargeldlosen Bezahlen von Produkten oder Dienstleistungen umfassend:
eine in mindestens einem Automaten angeordnete Bezahleinheit, die mindestens eine Sende/Empfangseinheit für eine Kurzstreckenkommunikation, eine Verarbeitungseinheit und einen Speicher aufweist, und mindestens ein Mobiltelefon, das eine Sende/Empfangsvorrichtung sowohl für eine Kurzstreckenkommunikation als auch für eine Langstreckenkommunikation, eine Verarbeitungseinheit und einen Speicher aufweist,
wobei in dem Speicher des Mobiltelefons ein Guthaben für den Betreiber des Automaten gespeichert ist und
wobei nach Auswahl mindestens eines Produktes oder mindestens einer Dienstleistung die Bezahleinheit eingerichtet ist, einen in dem Speicher der Bezahleinheit gespeicherten Betrag für das ausgewählte Produkt oder die Dienstleistung ausschließlich über die Kurzstrecken-kommunikation an das Mobiltelefon zu senden, die Verarbeitungseinheit des Mobiltelefons ausgebildet ist, das im Speicher des Mobiltelefons gespeicherte Guthaben um den Betrag zu verringern und die Sende/Empfangsvorrichtung ein Quittierungssignal für das Verringern des Betrages an die Bezahleinheit sendet, die daraufhin das ausgewählte Produkt oder die Dienstleistung zur Ausgabe freigibt,
wobei das System außerdem einen Server und eine Mehrzahl von Automaten mit Bezahleinheiten und mit Sensoren zum Abtasten von den Zustand der Automaten angebenden Parametern der Funktionsweise der Automaten umfasst, wobei die Sende/Empfangseinheiten der jeweiligen Bezahleinheit eingerichtet sind, Daten über den Zustand des jeweiligen Automaten über eine Kurzstreckenkommunikation untereinander zu senden und in ihren jeweiligen Speichern zu speichern, wobei die Daten bei der Kurzstreckenkommunikation einer der Bezahleinheiten mit dem mindestens einen Mobiltelefon mit an dieses übertragen werden und in seinem Speicher zwischengespeichert werden, wobei der Server eingerichtet ist, über eine Langstreckenkommunikation von dem mindestens einen Mobiltelefon die Daten über den Zustand der Mehrzahl von Automaten und über das ausgewählte Produkt oder die Dienstleistung zu empfangen, die bei der Kurzstreckenkommunikation zwischen Bezahleinheit und Mobiltelefon übertragen werden, sobald eine Langstreckenverbindung, gegebenenfalls zeitversetzt aufbaubar ist.

Es ist somit bei diesem System nicht notwendig, dass unmittelbar eine Langstreckenverbindung für eine Kommunikation zur Verfügung steht, vielmehr kann in dem Mobiltelefon ein Guthaben für den Betreiber des Automaten gespeichert sein, das im Vorhinein für den Betreiber angelegt wurde. Selbstverständlich können mehrere Guthaben für unterschiedliche Automatenbetreiber angelegt sein. Die Auswahl des Produkts oder der Dienstleistung kann direkt am Automaten vorgenommen werden, es ist jedoch auch möglich, die Auswahl über einen entsprechenden Dialog mit der Bezahleinheit am Mobiltelefon selbst zu treffen. Der Ablauf des Vorgangs zum Erstehen des Produkts oder der Dienstleistung ist in einem entsprechenden Programm gespeichert, das als eine Anwendung (Application) auf das Mobiltelefon geladen werden kann, wobei solche Anwendungen üblicherweise von einer zentralen Stelle verwaltet werden und von dieser heruntergeladen werden können.

Nach dem Übermitteln des Betrages für das ausgewählte Produkt oder die Dienstleistung durch die Bezahleinheit an das Mobiltelefon kann die Verarbeitungseinheit des Mobiltelefons prüfen, ob das Guthaben für den Betrag ausreichend ist oder nicht und falls es ausreicht, wird das Guthaben um den Betrag verringert. Falls es nicht ausreicht, kann eine Nachricht für die Notwendigkeit des Erhöhens des Guthabens an dem Mobiltelefon angezeigt werden und/oder die Sende/Empfangsvorrichtung des Mobiltelefons kann eine Verbindung über die Langstreckenkommunikation oder die Kurzstreckenkommunikation zu einer Kredit- oder einer Bezahlstation herstellen, über die das Guthaben für den Betreiber des Automaten durch einen Erhöhungsbetrag erhöht wird und in dem Speicher des Mobiltelefons als erhöhtes Guthaben gespeichert wird. Die Erhöhung des Guthabens kann mittels Kreditinformationen des Nutzers, die in dem Speicher des Mobiltelefons gespeichert sind oder von dem Benutzer eingegeben werden können, durchgeführt werden, wobei die Kreditinformation von der Sende/Empfangsvorrichtung des Mobiltelefons über die Langstreckenkommunikation an die Kreditstation gesendet werden kann und von dieser kann ein Bestätigungssignal über die Gutschreibung des Erhöhungsbetrags für den Betreiber des Automaten empfangen werden und entsprechend das erhöhte Guthaben im Speicher des Mobiltelefons gespeichert werden.

Wenn keine Langstreckenverbindung hergestellt werden kann, kann der Nutzer kurzfristig den Verkaufsvorgang unterbrechen und zu einem Ort mit einer Langstreckenverbindung gehen und das Guthaben dort aufladen und anschließend den Verkaufsfortgang fortführen. Es jedoch auch möglich, an dem Ort der Aufstellung des Automaten, insbesondere wenn eine Mehrzahl von Automaten von einem Betreiber vorhanden sind, wie beispielsweise in einem Waschsalon, über eine dort von dem Betreiber aufgestellte Bezahlstation einen Geldbetrag zu bezahlen. Mittels der Sende/Empfangsvorrichtung des Mobiltelefons nach Entrichten des Erhöhungsbetrages kann ein Bestätigungssignal über die Gutschreibung des Erhöhungsbetrags für den Betreiber des Automaten über die Kurzstreckenkommunikation mit der Bezahlstation empfangen werden und das erhöhte Guthaben kann im Speicher des Mobiltelefons gespeichert werden.

Die Bezahleinheit des mindestens einen Automaten ermöglicht es, in ihrem Speicher Daten über den Zustand des mindestens einen Automaten und über ausgegebene Produkte oder Dienstleistungen zu speichern, die an das mindestens eine Mobiltelefon über die Kurzstreckenkommunikation übertragen werden. Dabei können die Daten über den Zustand des mindestens einen Automaten, beispielsweise über eine Waschmaschine, von Sensoren detektiert werden, die an bzw. in dem Automaten angeordnet sind und die drahtgebunden oder drahtlos an die Bezahleinheit übertragen werden.

Das System umfasst einen Server, der beispielsweise an einer neutralen Stelle steht, d.h. nicht von dem Betreiber der Automaten zur Verfügung gestellt wird, wobei der Server eingerichtet ist, über eine Langstreckenkommunikation von dem mindestens einen Mobiltelefon die Daten über den Zustand des mindestens einen Automaten und über die ausgegebenen Produkte oder Dienstleistungen zu empfangen, die bei der Kurzstreckenkommunikation zwischen Bezahleinheit und Mobiltelefon übertragen werden. Dabei ist der Speicher des mindestens einen Mobiltelefons dazu eingerichtet, die Daten über den Zustand des mindestens einen Automaten und über die ausgegebenen Produkte oder Dienstleistungen zwischenspeichern und die Sende/Empfangsvorrichtung des Mobiltelefons ist dazu eingerichtet, die zwischengespeicherten Daten an den Server zu senden, sobald eine Langstreckenkommunikation aufbaubar ist. Der Server kann eingerichtet sein, nach Empfang der Daten, ein Empfangsbestätigungssignal an das Mobiltelefon zu senden, das in dem Speicher des Mobiltelefons zwischengespeichert wird. Mit dieser Art von Kommunikation ist es möglich, die Daten, die den Automaten betreffen, sicher an den Server zu übertragen, wobei die Langstreckenkommunikation zwischen Mobiltelefon und Server zeitversetzt zu dem eigentlichen Verkaufsvorgang vorgenommen werden kann, nämlich dann wenn eine Langstreckenverbindung zwischen Mobiltelefon und Server hergestellt werden kann. Dies bedeutet, dass das Mobiltelefon lediglich eine Art "Bote" ist, der die Dateninformation von der Bezahleinheit zum Server weiterleitet.

Die Sende/Empfangsvorrichtung des Mobiltelefons kann das zwischengespeicherte Empfangssignal der Weiterleitung der Daten über den Zustand des Automaten und der ausgegebenen Produkte oder Dienstleistungen an die Bezahleinheit des Automaten senden, sobald eine Kurzstreckenkommunikation zwischen der Bezahleinheit und dem Mobiltelefon aufbaubar ist. Das heißt, dass auch diese Übertragung des Empfangsbestätigungssignals von dem Mobiltelefon an die Bezahleinheit des Automaten unabhängig von dem eigentlichen Verkaufsvorgang ist und dann vorgenommen wird, wenn eine Kurzstreckenkommunikation zwischen dem Mobiltelefon und dem Automaten aufbaubar ist bzw. aufgebaut wird. Dies kann zeitlich sehr viel später sein, nämlich dann wenn der Nutzer des Mobiltelefons wieder einen Verkaufsvorgang mit dem Automaten starten will. Die in dem Mobiltelefon zwischengespeicherte Empfangsbestätigungsnachricht wird nach Weiterleitung an die Bezahleinheit aus dem Speicher des Mobiltelefons gelöscht. Eine Löschung der Information kann auch nach einem längeren vorgegebenen Zeitraum vorgenommen werden, da nicht notwendigerweise das Mobiltelefon innerhalb dieses Zeitraums an dem Automaten vorbeikommt.

Das System kann eine Mehrzahl von Mobiltelefonen umfassen, wobei das jeweilige Mobiltelefon der Mehrzahl von Mobiltelefonen Daten über den Zustand des mindestens einen Automaten und über ausgegebene Produkte oder Dienstleistungen, die in dem Speicher der Bezahleinheit des Automaten gespeichert sind, bei einer Kurzstreckenkommunikation zwischen Bezahleinheit und dem jeweiligen Mobiltelefon empfängt und zwischenspeichert und wobei der Server eingerichtet ist, über eine Langstreckenkommunikation von dem jeweiligen Mobiltelefon der Mehrzahl von Mobiltelefonen über eine Langstreckenkommunikation die Daten über den Zustand des mindestens einen Automaten und über ausgegebene Produkte und Dienstleistungen zu empfangen, die von den jeweiligen Mobiltelefonen gesendet werden, sobald die Langstreckenkommunikation aufbaubar ist. Der Server ist weiterhin eingerichtet, nach Empfang der Daten, ein Empfangsbestätigungssignal an die Mehrzahl von Mobiltelefonen zu senden, sobald eine Langstreckenkommunikation zwischen einem jeweiligen der Mehrzahl von Mobiltelefonen aufgebaut ist, das in dem Speicher des jeweiligen Mobiltelefons zwischengespeichert wird.

Mit diesem System wird sichergestellt, dass die Daten von der jeweiligen Bezahleinheit an den Server geleitet werden, wobei hier die Mehrzahl von Mobiltelefonen als "Boten" dient. Da alle Mobiltelefone jeweils eine Menge oder eine Untermenge von Daten über den Zustand des mindestens einen Automaten und über die ausgegebenen Produkte und Dienstleistungen speichern und weitergeben können, wenn eine Langstreckenkommunikation möglich ist, wird die Wahrscheinlichkeit, dass der Server die Informationen erhält, stark erhöht bzw. liegt bei 100%.

Das System umfasst auch eine Mehrzahl von Automaten mit jeweiligen Bezahleinheiten, wobei die Mehrzahl von Automaten über jeweils eine Kurzstreckenverbindung Daten über ihren Zustand und über ausgegebene Produkte und Dienstleistungen austauscht, die in den jeweiligen Speichern der Bezahleinheiten zwischengespeichert werden. Bei diesem System werden die entsprechenden Informationen über alle Automaten zumindest über ein Mobiltelefon der Mehrzahl von Mobiltelefonen, gegebenenfalls von mehreren Mobiltelefonen, gegebenenfalls zeitversetzt, an den Server weitergeleitet. Das jeweilige Empfangsbestätigungssignal der vom Server empfangenen Daten wird über ein oder mehrere Mobiltelefone der Mehrzahl von Mobiltelefonen an die Bezahleinheiten weitergeleitet, die die Informationen untereinander über die Kurzstreckenkommunikation austauschen, wodurch sichergestellt werden kann, dass Daten und Informationen zwischen Bezahleinheiten und Server und zwischen Server und Bezahleinheiten über die Mobiltelefone ausgetauscht werden können. Sobald das Empfangsbestätigungssignal von dem jeweiligen Mobiltelefon an mindestens eine Bezahleinheit weitergeleitet wurde, werden die Daten im Mobiltelefon gelöscht und in gleicher Weise können die Daten von den Bezahleinheiten nach Empfang der Empfangsbestätigungssignale gelöscht werden.

Die Daten des Servers können von dem Betreiber der Automaten über eine Langstreckenkommunikation, beispielsweise Internet, abgerufen werden. Bei der gesamten Kommunikation zwischen Mobiltelefon und Bezahleinheit der Automaten und zwischen Mobiltelefon und Server sind die Daten verschlüsselt und individuell autorisiert.

Das System ist in der Zeichnung dargestellt und wird in der folgenden Beschreibung näher erläutert.

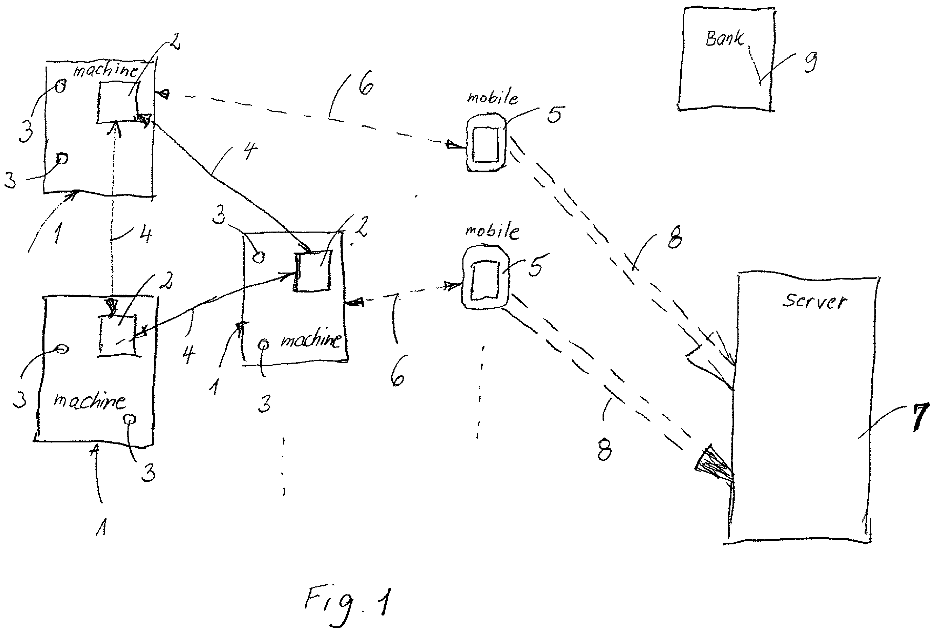

Fig. 1 ist ein Ausführungsbeispiel eines Aufbaus des Systems.

Das in Fig. 1 dargestellte System umfasst beispielhaft eine Mehrzahl von Automaten 1, von denen in der Figur nur drei dargestellt sind, es können aber eine Vielzahl von Automaten vorgesehen sein. Beispielsweise sind die Automaten als Waschmaschinen in einem Waschsalon ausgebildet, die unterschiedliche Waschvorgänge zur Verfügung stellen und die für diese Dienstleistungen des Waschens bestimmte Beträge berechnen. Die Automaten können auch Verkaufsautomaten sein, die unterschiedliche Produkte mit unterschiedlichen Beträgen enthalten. Die Automaten 1 weisen jeweils Bezahleinheiten 2 auf, die mindestens eine Verarbeitungseinheit, z.B. einen Mikrocontroller, einen Speicher und eine Sende/Empfangseinheit für eine Kurzstreckenkommunikation auf. Die Kurzstreckenkommunikation basiert beispielsweise auf einem Bluetoothmodul, wobei jedoch auch andere Technologien möglich sind. Die Automaten 1 können Sensoren 3 enthalten, die Parameter für den Zustand des jeweiligen Automaten 1 abtasten, wobei der Zustand auf Parametern der Funktionsweise des Automaten basiert. Die einzelnen Automaten 1 stehen über eine Kurzstreckenkommunikation 4 miteinander in Verbindung und übertragen jeweils Daten, die den Zustand des Automaten und die von dem Automaten zur Verfügung gestellten Produkte oder Dienstleistungen betreffen. Diese Informationen werden jeweils in allen Speichern der Bezahleinheiten aller Automaten gespeichert. Außerdem speichern die Speicher der Bezahleinheiten die Beträge für die Produkte bzw. Dienstleistungen, die ein Automat enthält bzw. liefert.

In der Figur sind zwei Mobiltelefone 5 gezeigt, diese zwei Mobiltelefone sind nur beispielhaft dargestellt, es kann nur ein Mobiltelefon vorgesehen sein. Im Ausführungsbeispiel wird jedoch das System mit einer Vielzahl von Mobiltelefonen beschrieben, die mindestens eine Verarbeitungseinheit und einen Speicher, sowie eine Anzeige und eine Sende/Empfangsvorrichtung für eine Kurzstreckenkommunikation und eine Langstreckenkommunikation aufweisen. In dem Mobiltelefon 5 ist ein Programm bzw. eine Applikation gespeichert, das den Ablauf der Kommunikation zwischen den Bestandteilen des Systems steuert. In dem Speicher des Mobiltelefons 5 sind Daten gespeichert, die die Höhe eines oder mehrere Guthaben für den Betreiber der Automaten und ggf. für andere Betreiber von anderen Automaten, wobei das Guthaben im Vorhinein von dem Nutzer des Mobiltelefons an den Betreiber überwiesen oder gutgeschrieben wurde mit der Maßgabe, dass das Guthaben durch Inanspruchnahme von Produkten oder Dienstleistungen, die die Automaten 1 liefern, abgeschmolzen wird. Über die Sende/Empfangsvorrichtung des Mobiltelefons 5 und die Sende/Empfangseinheit der Bezahleinheit 2 eines Automaten 1 kann eine Kurzstreckenkommunikation 6, beispielsweise als Bluetoothverbindung aufgebaut werden.

Weiterer Bestandteil des Systems ist ein Server 7, in dem Daten über den Zustand der Automaten 1 sowie über die Produkte oder Dienstleistungen der Automaten gespeichert sind. Selbstverständlich hat auch der Server 7 alle Bestandteile, die für einen Server immanent sind, wie Verarbeitungseinheit, Speicher, Kommunikationseinheiten, die hier im Einzelnen nicht weiter ausgeführt werden. Die Mobiltelefone 5 können mit dem Server eine Langstreckenkommunikation ausführen, wie beispielsweise eine Kommunikation über eine Internetverbindung.

Im Folgenden soll die Kommunikation zwischen Mobiltelefon 5 und Bezahleinheit 2 des Automaten beschrieben werden.

Zu Beginn der Kurzstreckenkommunikation 4 zwischen der Sende/Empfangsvorrichtung des Mobiltelefons 5 und der Sende/Empfangseinheit der Bezahleinheit 2 übermittelt das Mobiltelefon 5 den Wunsch ein oder mehrere Produkte oder eine mehrere Dienstleistung zu erwerben. Dabei kann die Bezahleinheit bzw. die Sende/Empfangseinheit auch dem Mobiltelefon 5 eine Anzahl möglicher Produkte und Services zusammen mit deren Preisen mitteilen, und der Nutzer des Mobiltelefons selektiert auf dem Mobiltelefon die Produkte, die er haben möchte. Dann wird die Selektion mitsamt den Preisen an den Automaten geschickt. Nachdem der Nutzer an seinem Mobiltelefon und/oder dem Automaten selbst seine Auswahl des Produkts oder der Dienstleistung durchgeführt hat, wird der jeweilige Betrag des Produkts oder der Dienstleistung von der Bezahleinheit 2 an das Mobiltelefon 5 übermittelt. In dem Mobiltelefon 5 wird erst geprüft, ob für den Verkaufsvorgang das in dem Speicher des Mobiltelefons 5 gespeicherte Guthaben bzw. der dort gespeicherte Betrag ausreichend ist. Wenn dieser Betrag ausreichend ist, wird das Guthaben um den abzuziehenden Betrag vermindert und es wird ein Quittierungssignal für das Verringern des Betrags an die Bezahleinheit 2 gesendet, so dass das ausgewählte Produkt oder die Dienstleistung zur Ausgabe freigegeben werden kann.

Wenn das auf dem Telefon 5 gespeicherte Guthaben nicht ausreicht, kann der Nutzer des Mobiltelefons 5 über eine Langstreckenverbindung eine Kommunikation mit einer Bank 9 oder einem Finanzdienstleister durchführen, bei der ein als Guthaben bezeichneter Betrag dem Betreiber des Automaten gutgeschrieben wird und nach dieser Transaktion wird von dem Bezahldienstleister bzw. der Bank 9 ein Bestätigungssignal mit der Summe der Bezahlung an das Mobiltelefon 5 gesendet, in dessen Speicher dann das Guthaben um den Bezahlungsbetrag erhöht wird. Die "Voraus"bezahlung an den Betreiber des Automaten kann auf üblichem Wege mit Kreditkarte, Paypalkonto oder anderen Einzugsermächtigungen durchgeführt werden.

Es kann aber in dem Bereich der Automaten 1 von dem Betreiber der Automaten auch eine Bezahlstation bzw. eine Aufladestation in unmittelbarer Nähe der Automaten vorgesehen sein. In diesem Fall kann beispielsweise über einen Bezahlautomaten bar bezahlt werden und über eine Nahfeldkommunikation zwischen dem Bezahlautomaten bzw. der Bezahlstation kann das Guthaben auf dem Mobiltelefon 5 erhöht werden.

Die Kommunikation zwischen der Bezahleinheit 2 des Automaten 1 und dem Mobiltelefon 5 ist selbstverständlich abgesichert durch ein Verschlüsselungsverfahren.

Wie aus der obigen Beschreibung zu ersehen ist, verwaltet das System kein Geld, das auf dem Mobiltelefon 5 gespeicherte und verwaltete Guthaben entspricht immer einem Kredit, der vom Nutzer des Mobiltelefons 5 an den Betreiber der Automaten 1 gegeben wurde.

Im Folgenden soll die Kommunikation zwischen Bezahleinheit 2 der Automaten 1 und dem Server 7 beschrieben werden. Diese Kommunikation findet nicht direkt statt, sondern nur über Mobiltelefone 5 von Nutzern, die Daten und Informationen als sogenannte "Boten" oder als sogenannter "Kommunikationshub" weiterleiten. Wie schon ausgeführt, gibt es eine Kurzstreckenkommunikation zwischen den Bezahleinheiten 2 untereinander, die mit einer in zeitlichen Abständen aufgebauten Verbindung stattfindet. Bei dieser Kommunikation werden Daten hinsichtlich des Zustands der Automaten 1, die beispielsweise über die Sensoren 3 erhalten werden, jeweils an alle Bezahleinheiten 2 übertragen, so dass in der Bezahleinheit 2 bzw. in ihrem Speicher alle Daten der anderen Automaten gespeichert sind. Dies gilt für den Zustand der einzelnen Automaten sowie für die Informationen über die vorhandenen und ausgegebenen Produkte oder Dienstleistungen. Diese in dem Speicher der jeweiligen Bezahleinheit 2 gespeicherte Information wird bei einer Nahstreckenkommunikation 6 zwischen einem der Automaten bzw. Bezahleinheiten 2 und einem Mobiltelefon 5 an dieses Mobiltelefon 5 übertragen. Das bedeutet, dass alle Mobiltelefone 5, die mit einem der Automaten über die Nahstreckenkommunikation 6 in Verbindung treten, die Information über Zustand, Produkte und Dienstleistungen aller Automaten erhält. Diese Information wird in dem jeweiligen Speicher des Mobiltelefons 5 gespeichert. Zusätzlich zu dieser Information ist in dem Mobiltelefon die Information über den aktuellen Verkaufsvorgang gespeichert, die ggf. noch nicht von der aktuellen Bezahleinheit 2an die anderen Bezahleinheiten 2 weitergeleitet wurde. Die so gespeicherten Informationen werden über die Langstreckenkommunikation 8, beispielsweise eine Internetverbindung, an den Server 7 geleitet, sobald eine Langstreckenkommunikation aufbaubar ist. Das heißt, dass nicht gleichzeitig oder kurz nach dem Verkaufsvorgang zwischen Mobiltelefon 5 und Automat 1 die Daten an den Server 7 weitergeleitet werden, sondern auch zeitversetzt weitergeleitet werden können. Wenn beispielsweise keine Langstreckenkommunikation im Nahbereich der Automaten möglich ist, wird eine Kommunikation erst dann mit dem Server 7 durchgeführt, wenn tatsächlich im Beispielfall eine Internetverbindung zur Verfügung steht.

Da die Daten der Bezahleinheiten 2 von jedem Mobiltelefon 5, das mit einem Automaten 1 in Verbindung getreten war und in dem Speicher zwischengespeichert hat, zu einer Zeit, bei der eine Langstreckenkommunikation aufgebaut ist, an den Server 7 übertragen werden, ist davon auszugehen, dass alle notwenigen Daten der Automaten im Server 7 gesammelt werden. Sobald der Server 7 Daten von einem der Mobiltelefone 5 über die Langstreckenkommunikation 8 empfängt, sendet er ein Empfangsbestätigungssignal an das jeweilige Mobiltelefon 5 zurück, das diese Information wiederum in seinem Speicher speichert. Sobald das Mobiltelefon 5 wieder in den Nahbereich eines Automaten 1 kommt und eine Nahfeldkommunikation 6 aufbaut, wird das Empfangsbestätigungssignal an die jeweilige Bezahleinheit 2 weitergeleitet, die etwas zeitlich versetzt über die Nahstreckenkommunikation 4 die Information des Empfangsbestätigungssignals weiter an die anderen Bezahleinheiten 2 übermittelt. Es werden dann diese übermittelten Informationen sowohl im Mobiltelefon 5 als auch in den Bezahleinheiten 2 gelöscht. Falls das die Empfangsbestätigungssignale empfangende Mobiltelefon 5 nicht mehr in den Nahbereich der Automaten kommt, werden die Informationen nach einem vorgegebenen Zeitraum gelöscht.

Der Betreiber der Automaten kann nach Identifizierung und Identifikation die ihn betreffenden Daten über eine Langstreckenkommunikation vom Server 7 abrufen. Daten über den Betreiber des Automaten sind in der Konfiguration der Bezahleinheit enthalten, so dass eine Zuordnung der Bezahleinheiten zu den Betreibern vorgegeben ist, die mit den Nachrichten von den "Boten" (Mobiltelefonen 5) an den Server gelangen.

## Patentansprüche

1. System zum bargeldlosen Bezahlen von Produkten oder Dienstleistungen umfassend:
eine in mindestens einem Automaten angeordnete Bezahleinheit, die mindestens eine Sende/Empfangseinheit für eine Kurzstreckenkommunikation, eine Verarbeitungseinheit und einen Speicher aufweist, und mindestens ein Mobiltelefon, das eine Sende/Empfangsvorrichtung sowohl für eine Kurzstreckenkommunikation als auch für eine Langstreckenkommunikation, eine Verarbeitungseinheit und einen Speicher aufweist,
wobei in dem Speicher des Mobiltelefons ein Guthaben für den Betreiber des Automaten gespeichert ist und
wobei nach Auswahl mindestens eines Produktes oder mindestens einer Dienstleistung die Bezahleinheit eingerichtet ist, einen in dem Speicher der Bezahleinheit gespeicherten Betrag für das ausgewählte Produkt oder die Dienstleistung ausschließlich über die Kurzstreckenkommunikation an das Mobiltelefon zu senden, die Verarbeitungseinheit des Mobiltelefons ausgebildet ist, das im Speicher des Mobiltelefons gespeicherte Guthaben um den Betrag zu verringern und die Sende/Empfangsvorrichtung ein Quittierungssignal für das Verringern des Betrages an die Bezahleinheit sendet, die daraufhin das ausgewählte Produkt oder die Dienstleistung zur Ausgabe freigibt,
wobei das System außerdem einen Server und eine Mehrzahl von Automaten mit Bezahleinheiten und mit Sensoren zum Abtasten von den Zustand der Automaten angebenden Parametern der Funktionsweise der Automaten umfasst, wobei die Sende/Empfangseinheiten der jeweiligen Bezahleinheit eingerichtet sind, Daten über den Zustand des jeweiligen Automaten über eine Kurzstreckenkommunikation untereinander zu senden und in ihren jeweiligen Speichern zu speichern, wobei die Daten bei der Kurzstreckenkommunikation einer der Bezahleinheiten mit dem mindestens einen Mobiltelefon mit an dieses übertragen werden und in seinem Speicher zwischengespeichert werden, wobei der Server eingerichtet ist, über eine Langstreckenkommunikation von dem mindestens einen Mobiltelefon die Daten über den Zustand der Mehrzahl von Automaten und über das ausgewählte Produkt oder die Dienstleistung zu empfangen, die bei der Kurzstreckenkommunikation zwischen Bezahleinheit und Mobiltelefon übertragen werden, sobald eine Langstreckenverbindung, gegebenenfalls zeitversetzt aufbaubar ist.

2. System nach Anspruch 1, bei dem nach dem Übermitteln des Betrages für das ausgewählte Produkt oder die Dienstleitung durch die Bezahleinheit an das Mobiltelefon die Verarbeitungseinheit des Mobiltelefons prüft, ob das Guthaben für den Betrag ausreichend ist oder nicht und falls es ausreicht, das Guthaben um den Betrag verringert wird, und falls es nicht ausreicht, eine Nachricht zum Erhöhen des Guthabens angezeigt wird und/oder die Sende/Empfangsvorrichtung des Mobiltelefons eine Verbindung über die Langstreckenkommunikation oder die Kurzstreckenkommunikation zu einer Kredit- oder einer Bezahlstation herstellt, über die das Guthaben für den Betreiber des Automaten durch einen Erhöhungsbetrag erhöht werden kann und in dem Speicher des Mobiltelefons als erhöhtes Guthaben gespeichert wird.

3. System nach Anspruch 2, bei dem in dem Speicher des Mobiltelefons Kreditinformationen des Nutzers gespeichert sind oder in eine Eingabeeinheit des Mobiltelefons Kreditinformationen eingebbar sind, die von der Sende/Empfangsvorrichtung des Mobiltelefons über die Langstreckenkommunikation an die Kreditstation gesendet wird und von dieser ein Bestätigungssignal über die Gutschreibung des Erhöhungsbetrages für den Betreiber des Automaten empfangen wird und das erhöhte Guthaben im Speicher des Mobiltelefons gespeichert wird.

4. System nach Anspruch 2, bei dem über die Kurzstreckenkommunikation die Sende/Empfangsvorrichtung des Mobiltelefons von der Bezahlstation nach der Entrichtung des Erhöhungsbetrages ein Bestätigungssignals über die Gutschreibung des Erhöhungsbetrages für den Betreiber des Automaten empfängt und das erhöhte Guthaben im Speicher des Mobiltelefons gespeichert wird.

5. System nach Anspruch 1, **dadurch gekennzeichnet, dass** die Bezahleinheit des mindestens einen Automaten eingerichtet ist, in ihrem Speicher Daten über den Zustand des mindestens einen Automaten und über ausgegebene Produkte oder Dienstleistungen zu speichern, die an das mindestens eine Mobiltelefon über die Kurzstreckenkommunikation übertragen werden.

6. System nach Anspruch 5, das außerdem einen Server umfasst, der eingerichtet ist, über eine Langstreckenkommunikation von dem mindestens einen Mobiltelefon die Daten über den Zustand des mindestens einen Automaten und über die ausgegebenen Produkte oder Dienstleistungen zu empfangen, die bei der Kurzstreckenkommunikation zwischen Bezahleinheit und Mobiltelefon übertragen werden.

7. System nach Anspruch 6, bei dem der Speicher des mindestens einen Mobiltelefons die Daten über den Zustand des mindestens einen Automaten und über die ausgegebenen Produkte oder Dienstleistungen zwischenspeichert und die Sende/Empfangsvorrichtung des Mobiltelefons eingerichtet ist, die zwischengespeicherten Daten an den Server zu senden, sobald eine Langstreckenkommunikation aufbaubar ist, wobei der Server eingerichtet ist, nach Empfang der Daten, ein Empfangsbestätigungssignal an das Mobiltelefon zu senden, die in dem Speicher des Mobiltelefons zwischengespeichert wird.

8. System nach Anspruch 6, bei dem die Sende/Empfangsvorrichtung des Mobiltelefons das zwischengespeicherte Empfangsbestätigungssignal der Weiterleitung der Daten über den Zustand des Automaten und der ausgegebenen Produkte oder Dienstleistungen an die Bezahleinheit des Automaten sendet, sobald eine Kurzstreckenkommunikation zwischen der Bezahleinheit und dem Mobiltelefon aufbaubar ist.

9. System nach Anspruch 6, das eine Mehrzahl von Mobiltelefonen umfasst, wobei der Server eingerichtet ist, über eine Langstreckenkommunikation von mindestens einem der Mehrzahl von Mobiltelefonen Daten über den Zustand des mindestens einen Automaten und über ausgegebene Produkte oder Dienstleistungen zu empfangen, die bei einer Kurzstreckenkommunikation zwischen Bezahleinheit und dem jeweiligen der Mehrzahl von Mobiltelefonen übertragen werden, wobei die Speicher der Mehrzahl von Mobiltelefonen die Daten über den Zustand des mindestens einen Automaten und über ausgegebene Produkte oder die Dienstleistungen zwischenspeichern und die Sende/Empfangsvorrichtung des jeweiligen Mobiltelefons eingerichtet ist, die zwischengespeicherten Daten an den Server zu senden, sobald eine Langstreckenkommunikation aufbaubar ist, wobei der Server eingerichtet ist, nach Empfang der Daten, ein Empfangsbestätigungssignal an die Mehrzahl von Mobiltelefonen zu senden, sobald eine Langstreckenkommunikation zwischen einem jeweiligen der Mehrzahl von Mobiltelefonen aufgebaut ist, das in dem Speicher des jeweiligen Mobiltelefons zwischengespeichert wird.

10. System nach Anspruch 9, das eine Mehrzahl von Automaten mit Bezahleinheit umfasst, wobei die Mehrzahl von Automaten über jeweils eine Kurzstreckenverbindung Daten über ihren Zustand und über ausgegebene Produkte und Dienstleistungen austauscht, die in den jeweiligen Speichern der Bezahleinheiten zwischengespeichert werden.

11. System nach Anspruch 10, bei dem die Sende/Empfangsvorrichtung des jeweiligen Mobiltelefons der Mehrzahl von Mobiltelefonen das zwischengespeicherte Empfangsbestätigungssignal der Weiterleitung der Daten über den Zustand des oder der Automaten und der ausgegebenen Produkte oder Dienstleistungen an die Bezahleinheit eines Automaten sendet, sobald eine Kurzstreckenkommunikation zwischen der Bezahleinheit und dem Mobiltelefon aufgebaut ist.

12. System nach Anspruch 1, bei dem die Sende/Empfangsvorrichtung des Mobiltelefons eingerichtet ist, die zwischengespeicherten Daten an den Server zu senden, sobald eine Langstreckenkommunikation aufbaubar ist, wobei der Server eingerichtet ist, nach Empfang der Daten, ein Empfangsbetätigungssignal an das Mobiltelefon zu senden, die Sende/Empfangsvorrichtung des mindestens einen Mobiltelefons das Empfangsbestätigungssignal an mindestens eine Bezahleinheit sendet, sobald eine Kurzstreckenverbindung aufbaubar ist, die die Information an die anderen Bezahleinheiten weitergibt, und die in dem Speicher des Mobiltelefons zwischengespeicherten Daten gelöscht werden.

13. System nach Anspruch 1, bei dem die Bezahleinheit des mindestens einen Automaten als Münzprüfer für die Aufnahme von Münzen und Scheinen ausgebildet ist, der die Sende/Empfangseinheit für eine Kurzstreckenkommunikation umfasst.

## Claims

1. A system for the cashless payment of products or services, comprising:
a payment unit which is arranged in at least one automat and which comprises at least one transmitting/receiving unit for short-range communication, a processing unit and a memory, and at least one mobile telephone which comprises a transmitting/receiving device for short-range communication as well as for long-range communication, a processing unit and a memory,
wherein a credit for the operator of the automat is stored in the memory of the mobile telephone and
wherein the payment unit is configured to send an amount which is stored in the memory of the payment unit and is for the selected product or the service, exclusively via the short-range communication to the mobile telephone after the selection of at least one product or at least one service, and the processing unit of the mobile telephone is designed to reduce the credit stored in the memory of the mobile telephone by the amount, and the transmitting/receiving device sends a receipt signal for the reduction of the amount to the payment unit, said payment unit thereupon enabling the release of the selected product or the service,
wherein the system further comprises a server and a plurality of automats having payments units and having sensors for scanning parameters of the functioning manner of the automat concerning the condition of the automat, wherein the transmitting/receiving units of the respective payment unit are configured to send data on the condition of the respective automat amongst one another via a short-range communication and to store this data in their respective memories, wherein the data is transmitted to the at least one mobile telephone in the short-range communication of one of the payment units with this mobile telephone and is intermediately stored in its memory, wherein the server is configured to receive the data on the condition of the plurality of automats and on the selected product or service from the at least one mobile telephone via a long-range communication, said data being transferred between the payment unit and the mobile telephone with the short-range communication as soon as a long-range communication can be established, if necessary in a temporally staggered manner.

2. A system according to claim 1, in which the processing unit of the mobile telephone examines as to whether the credit for the amount is sufficient or not after the transfer of the amount for the selected product or service by the payment unit to the mobile telephone, and if the credit is sufficient, then the credit is reduced by the amount, and if it is not sufficient, a notification for increasing the credit is displayed and/or the transmitting/receiving device of the mobile telephone via a long-range communication or short-range communication creates a connection to a credit station or payment station, via which the credit for the operator of the automat can be increased by an increase amount and stored in the memory of the mobile telephone as an increased credit.

3. A system according to claim 2, in which credit information of the user is stored in the memory of the mobile telephone, or credit information can be inputted into an input unit of the mobile telephone, said credit information being sent from the transmitting/receiving device of the mobile telephone via the long-range communication to the credit station, and a confirmation signal concerning the crediting of the increase amount for the operator of the automat is received from this credit station, and the increased credit is stored in the memory of the mobile telephone.

4. A system according to claim 2, in which the transmitting/receiving device of the mobile telephone, via the short-range communication, receives a confirmation signal concerning the crediting of the increase amount for the operator of the automat, from the payment station after the payment of the increase amount, and the increased credit can be stored in the memory of the mobile telephone.

5. A system according to claim 1, **characterised in that** the payment unit of the at least one automat is configured to store data on the condition of the at least one automat and on issued products or services, in its memory, wherein this data is transmitted to the at least one mobile telephone via the short-range communication.

6. A system according to claim 5, which moreover comprises a server which is configured to receive the data on the condition of the at least one automat and on the issued products or services, from the at least one mobile telephone via a long-range communication, said data being transmitted between the payment unit and the mobile telephone with the short-range communication.

7. A system according to claim 6, in which the memory of the at least one mobile telephone intermediately stores data on the condition of the at least one automat and on the issued products or services, and the transmitting/receiving device of the mobile telephone is configured to send the intermediately stored data to the server, as soon as a long-range communication can be established, wherein the server is configured, after receiving the data, to send a receipt acknowledgement signal to the mobile telephone, said signal being intermediately stored in the memory of the mobile telephone.

8. A system according to claim 6, in which the transmitting/receiving device of the mobile telephone sends the intermediately stored receipt acknowledgement signal concerning the transfer of the data on the condition of the automat and on the issued products or services, to the payment unit of the automat, as soon as a short-range communication can be established between the payment unit and the mobile telephone.

9. A system according to claim 6, which comprises a plurality of mobile telephones, wherein the server is configured, via a long-range communication, to receive data on the condition of the at least one automat and on the issued products and services, from at least one of the plurality of mobile telephones, said data being transmitted between the payment unit and the respective one of the plurality of mobile telephones with a short-range communication, wherein the memories of the plurality of mobile telephones intermediately store the data on the condition of the at least one automat and on the issued products or services, and the transmitting/receiving device of the respective mobile telephone is configured to send the intermediately stored data to a server as soon as a long-range communication can be established, wherein the server is configured, after receiving the data, to send a receipt acknowledgement signal to the plurality of mobile telephones as soon as a long-range communication between a respective one of the plurality of mobile telephones is established, wherein this signal is intermediately stored in the memory of the respective mobile telephone.

10. A system according to claim 9, which comprises a plurality of automats with a payment unit, wherein the plurality of automats exchanges, in each case via a short-range connection, data on their condition and on issued products and services, and this data is intermediately stored in the respective memories of the payment units.

11. A system according to claim 10, in which the transmitting/receiving device of the respective mobile telephone of the plurality of mobile telephones sends the intermediately stored receipt acknowledgement signal concerning the transfer of the data on the condition of the automat or automats and on the issued products or services, to the payment unit of an automat, as soon as a short-range communication is established between the payment unit and the mobile telephone.

12. A system according to claim 1, in which the transmitting/receiving device of the mobile telephone is configured to send the intermediately stored data to the server, as soon as a long-range communication can be established, wherein the server is configured to send a receipt acknowledgement signal to the mobile telephone after receiving the data, the transmitting/receiving device of the at least one mobile telephone sends the receipt acknowledgement signal to at least one payment unit as soon as a short-range connection transferring the information to the other payment units can be established, and the data intermediately stored in the memory of the mobile telephone is deleted.

13. A system according to claim 1, in which the payment unit of the at least one automat is designed as a coin tester for receiving coils and banknotes and comprises the transmitting/receiving unit for a short-range communication.

## Revendications

1. Système de paiement sans numéraire de produits ou de services, comprenant :
une unité de paiement agencée dans au moins un automate, qui présente au moins une unité d'envoi/réception pour une communication à courte portée, une unité de traitement et une mémoire, et au moins un téléphone mobile, qui présente un dispositif d'envoi/réception à la fois pour une communication à courte portée et une communication à longue portée, une unité de traitement et une mémoire,
dans lequel un crédit pour l'opérateur de l'automate est stocké dans la mémoire du téléphone mobile, et
dans lequel, après sélection d'au moins un produit ou d'au moins un service, l'unité de paiement est configurée pour envoyer un montant stocké dans la mémoire de l'unité de paiement pour le produit ou le service sélectionné au téléphone mobile exclusivement via la communication à courte portée, l'unité de traitement du téléphone mobile est configurée pour diminuer du montant le crédit stocké dans la mémoire du téléphone mobile, et le dispositif d'envoi/réception envoie à l'unité de paiement un signal d'acquittement pour diminuer du montant, qui libère ensuite le produit ou le service sélectionné pour distribution,
dans lequel le système comprend en outre un serveur et une pluralité d'automates avec des unités de paiement et avec des capteurs pour détecter des paramètres du fonctionnement des automates indiquant l'état des automates, dans lequel les unités d'envoi/réception de l'unité de paiement respective sont conçues pour s'envoyer mutuellement des données sur l'état de l'automate respectif par le biais d'une communication à courte portée et pour les stocker dans leurs mémoires respectives, dans lequel les données sont transmises à l'au moins un téléphone mobile via une communication à courte portée entre l'une des unités de paiement et ce dernier, et sont temporairement stockées dans sa mémoire, dans lequel le serveur est conçu pour recevoir du au moins un téléphone mobile, par le biais d'une communication à longue portée, les données sur l'état de la pluralité d'automates et sur le produit ou le service sélectionné, qui sont transmises via la communication à courte portée entre l'unité de paiement et le téléphone mobile, dès qu'une connexion à longue portée peut être établie, facultativement avec un retard.

2. Système selon la revendication 1, dans lequel, après que le montant du produit ou du service sélectionné a été transmis par l'unité de paiement au téléphone mobile, l'unité de traitement du téléphone mobile vérifie si le crédit est suffisant pour le montant et, s'il est suffisant, le crédit est diminué du montant et, s'il n'est pas suffisant, un message d'augmentation du crédit est affiché et/ou le dispositif d'envoi/réception du téléphone mobile établit une connexion via la communication à longue portée ou la communication à courte portée avec une station de crédit ou de paiement via laquelle le crédit pour l'opérateur de l'automate peut être augmenté d'un montant accru et est stocké dans la mémoire du téléphone mobile en tant que crédit augmenté.

3. Système selon la revendication 2, dans lequel des informations de crédit de l'utilisateur sont stockées dans la mémoire du téléphone mobile ou des informations de crédit peuvent être saisies dans une unité d'entrée du téléphone mobile, qui sont envoyées du dispositif d'envoi/réception du téléphone mobile à la station de crédit via la communication à longue portée, et à partir de laquelle un signal de confirmation du montant augmenté crédité pour l'opérateur de l'automate est reçu, et le crédit augmenté est stocké dans la mémoire du téléphone mobile.

4. Système selon la revendication 2, dans lequel le dispositif d'envoi/réception du téléphone mobile reçoit un signal de confirmation de la station de paiement concernant le montant augmenté crédité pour l'opérateur de l'automate via la communication à courte portée après le paiement du montant augmenté, et le crédit augmenté est stocké dans la mémoire du téléphone mobile.

5. Système selon la revendication 1, **caractérisé en ce que** l'unité de paiement du au moins un automate est agencée pour stocker dans sa mémoire des données sur l'état du au moins un automate et sur les produits ou services distribués, qui sont transmises au au moins un téléphone mobile via la communication à courte portée.

6. Système selon la revendication 5, comprenant en outre un serveur configuré pour recevoir, via une communication à longue portée depuis le au moins un téléphone mobile, les données sur l'état du au moins un automate et sur les produits ou services distribués, qui sont transmises lors de la communication à courte portée entre l'unité de paiement et le téléphone mobile.

7. Système selon la revendication 6, dans lequel la mémoire du au moins un téléphone mobile stocke temporairement les données sur l'état du au moins un automate et sur les produits ou services distribués, et le dispositif d'envoi/réception du téléphone mobile est configuré pour envoyer les données stockées temporairement au serveur dès qu'une communication à longue portée peut être établie, dans lequel le serveur est configuré pour envoyer, après réception des données, un signal d'accusé de réception au téléphone mobile, qui est stocké temporairement dans la mémoire du téléphone mobile.

8. Système selon la revendication 6, dans lequel le dispositif d'envoi/réception du téléphone mobile envoie le signal d'accusé de réception stocké temporairement de la transmission des données sur l'état de l'automate et les produits ou services distribués à l'unité de paiement de l'automate dès qu'une communication à courte portée peut être établie entre l'unité de paiement et le téléphone mobile.

9. Système selon la revendication 6, qui comprend une pluralité de téléphones mobiles, dans lequel le serveur est configuré pour recevoir, via une communication à longue portée du au moins un de la pluralité de téléphones mobiles, des données sur l'état du au moins un automate et sur les produits ou services distribués, qui sont transmises lors d'une communication à courte portée entre l'unité de paiement et le téléphone mobile respectif de la pluralité de téléphones mobiles, dans lequel les mémoires de la pluralité de téléphones mobiles stockent temporairement les données sur l'état du au moins un automate et sur les produits ou services distribués, et le dispositif d'envoi/réception du téléphone mobile respectif est configuré pour envoyer les données stockées temporairement au serveur dès qu'une communication à longue portée peut être établie, dans lequel le serveur est configuré, après réception des données, pour envoyer un signal d'accusé de réception à la pluralité de téléphones mobiles dès qu'une communication à longue portée est établie avec l'un respectif de la pluralité de téléphones mobiles, qui est stocké temporairement dans la mémoire du téléphone mobile respectif.

10. Système selon la revendication 9, comprenant une pluralité d'automates avec une unité de paiement, dans lequel la pluralité d'automates échangent des données sur leur état et sur les produits et services distribués via une connexion à courte portée, qui sont stockées temporairement dans les mémoires respectives des unités de paiement.

11. Système selon la revendication 10, dans lequel le dispositif d'envoi/réception du téléphone mobile respectif de la pluralité de téléphones mobiles envoie le signal d'accusé de réception stocké temporairement de la transmission des données sur l'état du ou des automates et des produits ou services distribués à l'unité de paiement d'un distributeur automatique dès qu'une communication à courte portée est établie entre l'unité de paiement et le téléphone mobile.

12. Système selon la revendication 1, dans lequel le dispositif d'envoi/réception du téléphone mobile est configuré pour envoyer les données stockées temporairement au serveur dès qu'une communication à longue portée peut être établie, dans lequel le serveur est configuré pour envoyer un signal d'accusé de réception au téléphone mobile après réception des données, le dispositif d'envoi/réception du au moins un téléphone mobile envoie le signal d'accusé de réception à au moins une unité de paiement dès qu'une connexion à courte portée peut être établie, laquelle transmet les informations aux autres unités de paiement, et les données stockées temporairement dans la mémoire du téléphone mobile sont supprimées.

13. Système selon la revendication 1, dans lequel l'unité de paiement du au moins un automate est conçue sous la forme d'un monnayeur pour accepter des pièces de monnaie et des billets, qui comprend l'unité d'envoi/réception pour une communication à courte portée.
